# EUROPEAN PATENT APPLICATION

(11) **EP 2 738 717 A1**
(43) Date of publication of application: **04.06.2014**
(21) Application number: 12275189.4
(22) Date of filing: 30.11.2012
(51) Int. Cl.: G06Q 10/06

(54) **Apparatus and method for exchanging confidential data relating to a supply chain**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

In a method for exchanging confidential data relating to a supply chain, a computer provides a set of questions (25), relating to security arrangements of a supplier in the supply chain. The set of questions (25) is added to an electronic carrier medium (30). The electronic carrier medium (30) is transmitted to the supplier. A set of answers 65, 75 encrypted on an electronic carrier medium (80) is received from the supplier. The set of answers 65, 75 is decrypted. A computer processes the set of answers 65 to provide an assessment of the security arrangements of the supplier.

## Description

### FIELD OF THE INVENTION

This invention relates to the field of exchanging confidential data relating to a supply chain.

### BACKGROUND OF THE INVENTION

Many military systems are highly complex, involving integration of many complex parts. A military vehicle, for example a naval vessel, is typically constructed from very many parts supplied by very many different suppliers. Those suppliers typically obtain component parts, for manufacture of the parts that they themselves supply, from further suppliers further down the supply chain.

However, the supply chain poses a potential threat to military systems. Whilst prime manufacturers, at the top of the supply chain, have well-established and effective systems in place to protect the security, integrity and availability of their manufacturing processes, it may be that suppliers further down the supply chain are less vigilant or more naïve, and are therefore more vulnerable to compromise by malicious or hostile persons. Such a compromise may have an effect further up the supply chain, through incorporation of compromised parts as components in larger equipment. Accordingly, it is desirable to provide means to assess the security arrangements of suppliers throughout the supply chain, and thereby to ensure that the security, integrity and availability of information and equipment is assured throughout the supply chain.

It is known to carry out such an assessment manually, i.e. by direct questioning and other investigations by a supplier higher up the supply chain of a supplier lower down the supply chain. That approach is however typically very labour intensive and inefficient.

It is also known for a supplier higher up the supply chain to provide a supplier lower down the supply chain with a standard questionnaire, with questions carefully chosen to provide an assessment of the adequacy of the security arrangements of the supplier lower down the supply chain and thereby to identify gaps or other potential inadequacies. As a manual process, use of such a questionnaire is also rather labour intensive and inefficient.

It is also known to provide such a questionnaire via a web interface, with the questions, and one or more algorithms for analysing the answers, being coded into the website. However, as is well known, websites are themselves vulnerable to compromise. It is undesirable for information concerning suppliers and/or their security arrangements to be entered into a form on a website, because of the risk of interception and theft or alteration of the information. It is also undesirable for information concerning suppliers and/or their security arrangements to be stored on a server hosting a website, because of the risk of a third-party gaining access to the network or server via the website (or another connection to a public network, for example the Internet) and thereby stealing or altering the information.

Accordingly, it would be desirable to provide an apparatus and method for exchanging confidential data relating to a supply chain in which one or more of the aforementioned disadvantages is eliminated or at least reduced.

### DISCLOSURE OF THE INVENTION

A first aspect of the invention provides a method for exchanging confidential data relating to a supply chain, the method including the steps of:
(i) a computer providing a set of questions, relating to security arrangements of a supplier in the supply chain;
(ii) adding the set of questions to an electronic carrier medium
(iii) transmitting the electronic carrier medium to the supplier;
(iv) receiving from the supplier an electronic carrier medium storing a set of answers in an encrypted form;
(v) decrypting the set of answers;
(vi) a computer processing the set of answers to provide an assessment of the security arrangements of the supplier.

It may be that the questions relating to security arrangements of the supplier are or include questions selected to determine the level of knowledge of security matters that the supplier has.

Advantageously, the answers are not communicated over a telecommunications link; thus, there is an "air gap" between the supplier and the computer processing the set of answers. Thus, it may be that the electronic carrier medium is a physically discrete entity. It may be that the transmission of the physically discrete entity is by a courier or postal service. It may be that the electronic carrier medium is a disk or other portable data carrying media, for example a CD data disk or a DVD data disk. It may be that the electronic carrier medium is a removable drive, for example a solid-state drive (for example a thumb drive).

Alternatively, it may be that the answers are communicated over a telecommunications link between the supplier and the computer processing the set of answers. Thus, it may be that the electronic carrier medium is a virtual entity. It may be that the electronic carrier medium is an attachment to an e-mail. It may be that the transmission is over a network, which may be a private network or a public network (e.g. the Internet).

In either case, advantageously the encrypted answers are not communicated over a communications link that remains open throughout transmission of the encrypted answers; thus, for example, the encrypted answers are not communicated over a Virtual Private Network (VPN) link, in which a port remains open throughout the communication.

It may be that the set of questions on the electronic carrier medium is encrypted.

It may be that the computer providing the set of questions and the computer processing the set of answers are one and the same computer. It may be that the computer providing the set of questions and the computer processing the set of answers are two computers connected to each other via a network. It may be that all of steps (i) to (iv) are carried out by the same computer.

It may be that the method includes carrying out steps (i) to (vi) in respect of a plurality of suppliers in the supply chain. It may be that the method includes carrying out steps (i) to (vi) in respect of all suppliers in the supply chain.

It may be that the questions and/or the answers are encrypted by a method approved by the UK Government for use with protectively marked data. It may be that the questions and/or the answers are encrypted by a public-key encryption method, for example using the Pretty Good Privacy (PGP) or Gnu Privacy Guard (GPG) techniques.

It may be that the set of answers and/or the assessment is stored in a database on or associated with the computer processing the set of answers.

It may be that the set of answers is in the form of a .xml file.

Advantageously, the computer processing the answers, and/or the computer storing the answers and/or the assessment, is protected from attack by third-parties. It may be, for example, that said computer is isolated from all other computers (i.e. not connected to any other computer), or that said computer is on a network isolated from all other computers or on a network certified for handling of protectively marked data.

It may be that the computer providing the set of questions and/or the computer processing the set of answers (if different) runs manager tool software that carries out the providing and/or processing. It may be that the manager tool software carries out the encrypting and/or decrypting. It may be that the manager tool software is configured to enable the creation and management of supplier information. It may be that the manager tool software is configured to enable the creation and management of a plurality of different sets of questions. It may be that the manager tool software is configured to enable the creation and management of relationships between questions in a set of questions, so that a questionnaire tree structure can be created and managed, in which at least one of the questions is linked with at least one other of the questions, for example so that the answer to a question determines the next question to be asked. It may be that the manager tool software is configured to perform a check that the questions satisfy specified consistency rules. It may be that the manager tool software is configured to enable tracking of which suppliers have been sent the questions and which suppliers have returned answers. It may be that the manager tool software is configured to carry out a comparison between answers received from a plurality of suppliers. It may be that the manager tool software is configured to carry out a comparison between the assessments provided for each of a plurality of suppliers. It may be that the manager tool software is configured to carry out benchmarking of suppliers against benchmark standards or against other suppliers.

A second aspect of the invention includes a computer program product configured to cause a computer to carry out the method of the first aspect of the invention.

A third aspect of the invention provides a computer configured to:
(i) provide a set of questions, relating to security arrangements of a supplier in the supply chain;
(ii) add the set of questions to an electronic carrier medium;
(iii) transmit the electronic carrier medium to the supplier;
(iv) receive from the supplier a set of answers encrypted on an electronic carrier medium;
(v) decrypt the set of answers; and
(vi) process the set of answers to provide an assessment of the security arrangements of the supplier.

A fourth aspect of the invention provides a method for exchanging confidential data relating to a supply chain, the method including the steps of:
(i) receiving from an assessor an electronic carrier medium carrying a set of questions relating to security arrangements of the supplier;
(ii) encrypting a set of answers to the questions;
(iii) adding the set of answers to an electronic carrier medium;
(iv) providing the electronic carrier medium, including the encrypted set of answers, to the assessor.

It will of course be appreciated that features described in relation to one aspect of the present invention may be incorporated into other aspects of the present invention. For example, the computer of the invention may incorporate any of the features described with reference to the first method of the invention and *vice versa.*

### BRIEF DESCRIPTION OF THE DRAWINGS

Example embodiments of the invention will now be described by way of example only and with reference to the accompanying drawings, of which:

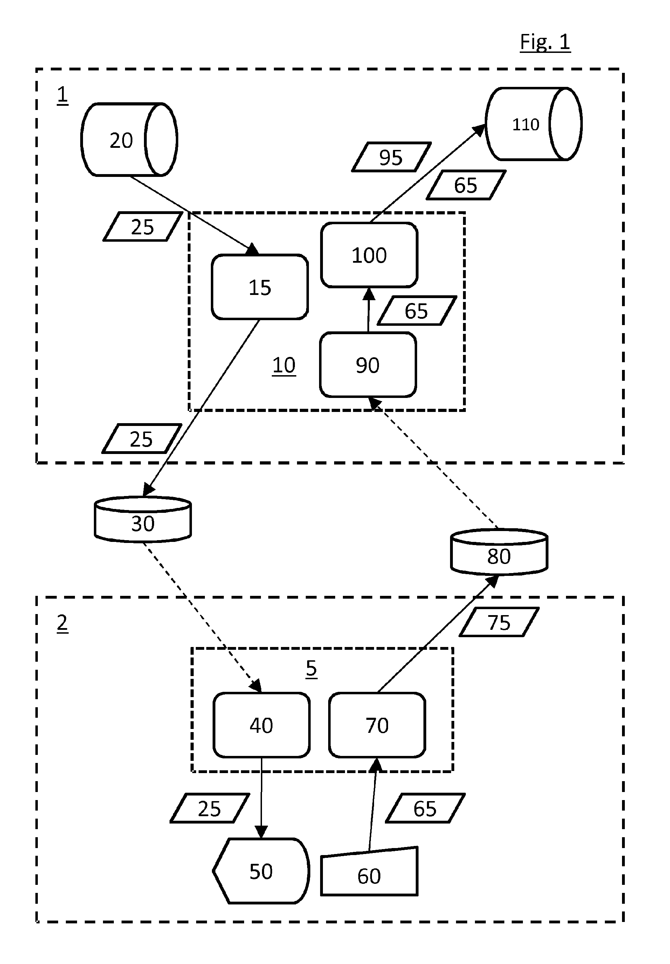

Figure 1 is a flowchart of a system according to an example embodiment of the invention.

### DETAILED DESCRIPTION

A system according to an embodiment of the invention includes an assessor sub-system 1 and a supplier subsystem 2.

The assessor subsystem 1 includes a processor 10 for carrying out management and assessment functions, a questionnaire database 20, and a results database 110. The processor 10 carries out a first process 15 in which a plurality of questions 25 relating to security arrangement of suppliers in a supply chain are retrieved from the questionnaire database 20 and added to a questionnaire CD-ROM 30. The processor 10 also carries out a second process 90 in which a plurality of encrypted answers 75 are read from an answers CD-ROM 80 received from the supplier and the encrypted answers 75 are decrypted to produce a plurality of plain-text answers 65. The processor 10 also carries out a third process 100 in which the plain-text answers 65 are scored in order to provide an assessment 95 of the security arrangements of the supplier, and the assessment 95, together with the plain-text answers 65, are stored on an assessment-results database 110.

The supplier subsystem 2 includes a processor 5 for processing the questions 25 and answers 65, 75. The processor 5 reads the questions 25 from the questionnaire CD-ROM 30 and presents them to a user on a display 50. The user provides data input 60 in the form of the plain-text answers 65 to the questions 25. The processor 5 also carries out a second process 70 in which the plain-text answers 65 are encrypted to provide the encrypted answers 75, and the encrypted answers 75 are added to the answers CD-ROM 80 for dispatch to the assessor sub-system 1.

In order for the questions 25 to be transmitted the supplier system 2, the supplier's details are recorded in another database (not shown). In this example, suppliers are identified by a combination of project name and company name (a supplier may be asked to conduct a plurality of assessments if question sets are tailored to a specific project).

In this example, the questionnaire database 20 comes with a pre-defined set of standard questions, but the processor 10 also enables additional questions to be added.

Question mappings are used in this example embodiment to create a questionnaire tree structure. Processor 10 includes a question editor (not shown). In the question editor, there is a tick box labelled 'First question', which is checked on the first question in the tree. Similarly, a 'Last question' tick box is checked to form an end point in the tree. Checking 'Last question' takes the supplier to an exit page where they can review their answers and package them for return to the assessor. The question editor allows multiple end points. The question editor also provides a 'To' box, which allows mapping of a question to the next linking question. In this example, three different types of question are supported, which can be picked from a drop-down menu:
(i) Free Text: This is a question where the supplier can enter free text as their answer. The question is typed into a Question text box. Guidance text can be entered if required and may be used to prompt the supplier with how to answer the question or to provide the supplier with further information. The 'Question mapping' is specified to generate the tree structure of the question set, determining what the next question in the tree is. In this example, free text questions can only link to one next question.
(ii) Multiple Choice, Single Selection: This is a question where the supplier can select one answer from a number of multiple choices. As with the Free Text question creation method described above, the question text and any guidance text is entered. Next the multiple choice answers are specified. For each question, a score may be added, to be used later to score a supplier during generation of the assessment. A "red flag" may be used to flag one or more particular answers, indicating that the processor 5 is to make a specified special response to those answers. Next the mapping for each question is entered; the mappings may be different for each answer that a supplier selects, which allows probing of a particular area if required.
(iii) Multiple choice, multiple selection: This question allows a supplier to select multiple answers that apply to them. As with the Free Text question creation method described above, the question text and any guidance text is entered and the multiple choice answers specified. The question mapping is entered; note that this type of question can only map to one question, unlike in the multiple choice, single selection question described above. A scoring system may be provided, for example based on the number of options a supplier selects.

In this example, the questions 25 are checked for consistency by the processor 10 prior to distribution. The consistency check checks, *inter alia*: that each question has a mapping in and out and, where scores are provided on a multiple choice question, that each answer has a score associated with it.

In this example, the processor 10 packages the questions 25 for a particular supplier. It does that by creating a zip file for a supplier containing the questions 25, a supplier ID and a copy of the client software and any third party software required to run the client software.

Tracking allows the assessor to view which suppliers have been sent a particular question set 25, the date it was distributed and the date answers 65 were received back from the supplier. In this example, the encrypted answers 75 are sent from the supplier as a GPG encrypted zip file containing the supplier name file, a checksum file and the questionnaire answers.

When the answers CR-ROM 80 is received back from the supplier, it is opened and decrypted, and the processor 10 checks the tracking database to see what entries are present for this supplier. If an entry is present with a 'time sent' and no 'time received' then this is the normal/valid situation. The receive time is updated and a PDF of the results created and displayed. If an entry is present with both 'time sent' and 'time received' set then a warning message is displayed saying that this supplier response has already been processed and that the last tracking entry for this supplier will be used to identify the question set. If no tracking entry for the supplier is present, then it is impossible to determine which question set has been used. An error message is displayed and the assessment is terminated.

Upon successful assessment, a PDF results file is created and displayed. The PDF is split into two sections; the first section is an overview with a percentage mark associated. Any result less than 40% are flagged red.

Whilst the present invention has been described and illustrated with reference to particular embodiments, it will be appreciated by those of ordinary skill in the art that the invention lends itself to many different variations not specifically illustrated herein.

In the example embodiment described above, the first, second and third processes 15, 90, 100 of the assessor subsystem 1 are all carried out by the same processor 10. In example alternative embodiments of the invention, those processes may be carried out by two or more different processors, or even by two or more different computers. Similarly, the first and second processes 40, 70 of the supplier subsystem 2 may be carried out by two or more different processors, or even by two or more different computers.

Likewise, in example alternative embodiments, the questionnaire database 20 and the results database 110 are one and the same database.

In the example embodiment described above, the questions 25 and the encrypted answers 75 are transmitted between the assessor subsystem 1 and the supplier subsystem 2 on two different CD-ROMs 30, 80 (portable data-carrying media other than CD-ROMs may of course be used). In alternative example embodiments, the same CD or other media may be used for both the questions 25 and the encrypted answers 75.

As an alternative to portable data-carrying media such as a CD-ROM 30, 80, the questions 25 and/or the encrypted answers 75 may be transmitted between the assessor subsystem 1 and the supplier subsystem 2 by a direct communications link, for example as an attachment to an e-mail, or using the File Transfer Protocol (FTP).

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may be absent in other embodiments.

## Claims

1. A method for exchanging confidential data relating to a supply chain, the method including the steps of:
(i) a computer providing a set of questions, relating to security arrangements of a supplier in the supply chain;
(ii) adding the set of questions to an electronic carrier medium
(iii) transmitting the electronic carrier medium to the supplier;
(iv) receiving from the supplier a set of answers encrypted on an electronic carrier medium;
(v) decrypting the set of answers;
(vi) a computer processing the set of answers to provide an assessment of the security arrangements of the supplier.

2. A method as claimed in claim 1 in which the answers are not communicated over a telecommunications link.

3. A method as claimed in claim 1 or claim 2, in which the electronic carrier medium is a disk or other portable data carrying media.

4. A method as claimed in claim 1 in which the answers are communicated over a telecommunications link between the supplier and the computer processing the set of answers.

5. A method as claimed in claim 4 in which the electronic carrier medium is an attachment to an e-mail.

6. A method as claimed in any preceding claim, in which the method includes carrying out steps (i) to (vi) in respect of a plurality of suppliers in the supply chain.

7. A method as claimed in any preceding claim, in which the computer processing the answers, and/or the computer storing the answers and/or the assessment is isolated from all other computers or that said computer is on a network isolated from all other computers or on a network certified for handling of protectively marked data.

8. A method as claimed in any preceding claim, in which the computer providing the set of questions and/or the computer processing the set of answers, if different, runs manager tool software that carries out the providing and/or processing.

9. A method as claimed in claim 8, in which the manager tool software is configured to enable the creation and management of supplier information.

10. A method as claimed in claim 8 or claim 9, in which the manager tool software is configured to enable the creation and management of relationships between questions in a set of questions, so that a questionnaire tree structure can be created and managed, in which at least one of the questions is linked with at least one other of the questions.

11. A method as claimed in any of claims 8 to 10, in which the manager tool software is configured to perform a check that the questions satisfy specified consistency rules.

12. A method as claimed in any of claims 8 to 11, in which the manager tool software is configured to enable tracking of which suppliers have been sent the questions and which suppliers have returned answers.

13. A computer program product configured to cause a computer to carry out the method of any preceding claim.

14. A computer configured to:
(i) provide a set of questions, relating to security arrangements of a supplier in the supply chain;
(ii) add the set of questions to an electronic carrier medium;
(iii) transmit the electronic carrier medium to the supplier;
(iv) receive from the supplier a set of answers encrypted on an electronic carrier medium;
(v) decrypt the set of answers; and
(vi) process the set of answers to provide an assessment of the security arrangements of the supplier.

15. A method for exchanging confidential data relating to a supply chain, the method including the steps of:
(i) receiving from an assessor an electronic carrier medium carrying a set of questions relating to security arrangements of the supplier;
(ii) encrypting a set of answers to the questions;
(iii) adding the set of answers to an electronic carrier medium;
(iv) providing the electronic carrier medium, including the encrypted set of answers, to the assessor.
